# EUROPEAN PATENT APPLICATION

(11) **EP 1 215 240 A1**
(43) Date of publication of application: **19.06.2002**
(21) Application number: 01128344.7
(22) Date of filing: 30.11.2001
(51) Int. Cl.: C08L 23/22, C08L 23/28

(54) **Rubber composition for tire treads**

(30) Priority: 12.12.2000 EP 00126552
(71) Applicant: BAYER AG, 51368 Leverkusen (DE)
(72) Inventor: Langstein, Gerhard, Dr., 51515 Kürten (DE); Bohnenpoll, Martin, Dr., 51375 Leverkusen (DE); Sumner, Anthony, 51061 Köln (DE); Verhelst, Marc, 2900 Schoten (BE)

(57) **Abstract**

The object of the present invention is to provide a rubber composition for a tire tread particularly in a pneumatic tire characterized in that said rubber composition comprises a low-gel, high molecular weight isoolefin multiolefin copolymer, in particular a low-gel, high molecular weight butyl rubber, or a low-gel, high molecular weight isoolefin multiolefin copolymer synthesized from isobutene, isoprene and optionally further monomers, with a multiolefin content of greater than 2.5 mol%, a molecular weight M_{w} of greater than 240 kg/mol and a gel content of less than 1.2 wt.% and/or a halogenated, low-gel, high molecular weight isoolefin multiolefin copolymer, in particular a halogenated, low-gel, high molecular weight butyl rubber, or a halogenated, low-gel, high molecular weight isoolefin multiolefin copolymer synthesized from isobutene, isoprene and optionally further monomers, with a multiolefin content of greater than 2.5 mol%, a molecular weight M_{w} of greater than 240 kg/mol and a gel content of less than 1.2 wt.%, a process for the preparation of said rubber composition, and a tire tread comprising said rubber composition.

## Description

### TECHNICAL FIELD

The present invention relates to a rubber composition for a tire tread, in particular a tire tread suitable for a pneumatic tire.

### BACKGROUND ART

Wet grip and the improvement of the wet grip is an important goal in today's Tire Industry. The incorporation of butyl rubber and/or halogenated butyl rubber is known to improve the wet grip of tire treads but has generally poor abrasion resistance which leads to unacceptable life times of tires (see US-A-2,698,041, GB-A-2,072,576 and EP-A1-0 385 760)

Butyl rubber is a copolymer of an isoolefin and one or more multiolefins as comonomers. Commercial butyl comprise a major portion of isoolefin and a minor amount, not more than 2.5 wt%, of a multiolefin. The preferred isoolefin is isobutylene.

Suitable multiolefins include isoprene, butadiene, dimethyl butadiene, piperylene, etc. of which isoprene is preferred.

Halogenated butyl rubber is butyl rubber which has Cl and/or Br-groups.

Butyl rubber is generally prepared in a slurry process using methyl chloride as a vehicle and a Friedel-Crafts catalyst as the polymerization initiator. The methyl chloride offers the advantage that AlCl₃ a relatively inexpensive Friedel-Crafts catalyst is soluble in it, as are the isobutylene and isoprene comonomers. Additionally, the butyl rubber polymer is insoluble in the methyl chloride and precipitates out of solution as fine particles. The polymerization is generally carried out at temperatures of about -90°C to -100°C. See U.S. Patent No. 2,356,128 and *Ullmanns Encyclopedia of Industrial Chemistry,* volume A 23, 1993, pages 288-295. The low polymerization temperatures are required in order to achieve molecular weights which are sufficiently high for rubber applications.

However, a higher degree of unsaturation would be desirable for more efficient crosslinking with other, highly unsaturated diene rubbers (BR, NR or SBR) present in the tire and therefore improving the abrasion resistance and overcome the life time problem.

Raising the reaction temperature or increasing the quantity of isoprene in the monomer feed results in more poor polymer properties, in particular, in lower molecular weights. The molecular weight depressing effect of multiolefin comonomers may, in principle, be offset by still lower reaction temperatures. However, in this case the secondary reactions, which result in gelation occur to a greater extent. Gelation at reaction temperatures of around -120°C and possible options for the reduction thereof have been described (*c*.*f*. W.A. Thaler, D.J. Buckley Sr., Meeting of the Rubber Division, ACS, Cleveland, Ohio, May 6-9, 1975, published in *Rubber Chemistry & Technology* 49, 960-966 (1976)). The auxiliary solvents such as CS₂ required for this purpose are not only difficult to handle, but must also be used at relatively high concentrations which disturbs the performance of the resulting butyl rubber in the tread.

It is known from EP-A1-818 476 to use a vanadium initiator system at relatively low temperatures and in the presence of an isoprene concentration which is slightly higher than conventional (approx. 2 mol% in the feed), but, as with AlCl₃-catalyzed copolymerization at -120°C, in the presence of isoprene concentrations of >2.5 mol% this results in gelation even at temperatures of -70°C. This product is perfect for the application in tire treads.

Halogenated butyls are well known in the art, and possess outstanding properties such as oil and ozone resistance and improved impermeability to air. Commercial halobutyl rubber is a halogenated copolymer of isobutylene and up to about 2.5 wt% of isoprene. As higher amounts of isoprene lead to gelation and/or too low molecular weight of the regular butyl being the starting material for halogenated butyl, no gelfree, halogenated butyls with comonomer contents of greater than 2.5 mol%, a molecular weight M_{w} of greater than 240 kg/mol and a gel content of less than 1.2 wt.% are known.

### SUMMARY OF THE INVENTION

The object of the present invention is to provide a rubber composition for a tire tread particularly in a pneumatic tire characterized in that said rubber composition comprises a low-gel, high molecular weight isoolefin multiolefin copolymer, in particular a low-gel, high molecular weight butyl rubber, or a low-gel, high molecular weight isoolefin multiolefin copolymer synthesized from isobutene, isoprene and optionally further monomers, with a multiolefin content of greater than 2.5 mol%, a molecular weight M_{w} of greater than 240 kg/mol and a gel content of less than 1.2 wt.% or a halogenated, low-gel, high molecular weight isoolefin multiolefin copolymer, in particular a halogenated, low-gel, high molecular weight butyl rubber, or a halogenated, low-gel, high molecular weight isoolefin multiolefin copolymer synthesized from isobutene, isoprene and optionally further monomers, with a multiolefin content of greater than 2.5 mol%, a molecular weight M_{w} of greater than 240 kg/mol and a gel content of less than 1.2 wt.% or a mixture of said non-halogenated and halogenated isoolefin copolymer.

Another object of the present invention is to provide a process for the preparation of said rubber composition.

Still another object of the present invention is to provide a tire tread comprising said rubber composition.

### DETAILED DESCRIPTION OF THE INVENTION

With respect to the monomers polymerized to yield the copolymer used in the composition, the expression isoolefin in this invention is preferably used for isoolefins with 4 to 16 carbon atoms of which isobutene is preferred.

As multiolefin every multiolefin copolymerizable with the isoolefin known by the skilled in the art can be used. Dienes are preferably used. Isoprene is particularly preferably used.

As optional monomers every monomer copolymerizable with the isoolefins and/or dienes known by the skilled in the art can be used. Styrene, alpha-methyl styrene, various alkyl styrenes including p-methylstyrene, p-methoxy styrene, 1-vinyl-naphthalene, 2-vinyl naphthalene, 4-vinyl toluene are preferably used.

The multiolefin content is greater than 2.5 mol%, preferably greater than 3.5 mol%, more preferably greater than 5 mol%, even more preferably greater than 7 mol%.

The molecular weight M_{w} is greater than 240 kg/mol, preferably greater than 300 kg/mol, more preferably greater than 350 kg/mol, even more preferably greater than 400 kg/mol.

The gel content is less than 1.2 wt.%, preferably less than 1 wt%, more preferably less than 0.8 wt%, even more preferably less than 0.7 wt%.

The polymerization is preferably performed in the presence of an organic nitro compound and a catalyst/initiator selected from the group consisting of vanadium compounds, zirconium halogenid, hafnium halogenids, mixtures of two or three thereof, and mixtures of one, two or three thereof with AlCl₃, and from AlCl₃ derivable catalyst systems, diethylaluminum chloride, ethylaluminum chloride, titanium tetrachloride, stannous tetrachloride, boron trifluoride, boron trichloride, or methylalumoxane.

The polymerization is preferably performed in a suitable solvent, such as chloroalkanes, in such a manner that
- in case of vanadium catalysis the catalyst only comes into contact with the nitroorganic compound in the presence of the monomer
- in case of zirconium/hafnium catalysis the catalyst only comes into contact with the nitroorganic compound in the absence of the monomer.

The nitro compounds used in this process are widely known and generally available. The nitro compounds preferably used according to the invention are disclosed in copending DE 100 42 118.0 which is incorporated by reference herein and are defined by the general formula (I)

R-NO₂ (I)

wherein R is selected from the group H, C₁-C₁₈ alkyl, C₃-C₁₈ cycloalkyl or C₆-C₂₄ cycloaryl.

C₁-C₁₈ alkyl is taken to mean any linear or branched alkyl residues with 1 to 18 C atoms known to the person skilled in the art, such as methyl, ethyl, n-propyl, i-propyl, n-butyl, i-butyl, t-butyl, n-pentyl, i-pentyl, neopentyl, hexyl and further homologues, which may themselves in turn be substituted, such as benzyl. Substituents, which may be considered in this connection, are in particular alkyl or alkoxy and cycloalkyl or aryl, such benzoyl, trimethylphenyl, ethylphenyl. Methyl, ethyl and benzyl are preferred.

C₆-C₂₄ aryl means any mono- or polycyclic aryl residues with 6 to 24 C atoms known to the person skilled in the art, such as phenyl, naphthyl, anthracenyl, phenanthracenyl and fluorenyl, which may themselves in turn be substituted. Substituents which may in particular be considered in this connection are alkyl or alkoxyl, and cycloalkyl or aryl, such as toloyl and methylfluorenyl. Phenyl is preferred.

C₃-C₁₈ cycloalkyl means any mono- or polycyclic cycloalkyl residues with 3 to 18 C atoms, such as cyclopropyl, cyclobutyl, cyclopentyl, cyclohexyl, cycloheptyl, cyclooctyl and further homologues, which may themselves, in turn, be substituted. Substituents which may, in particular, be considered in this connection are alkyl or alkoxy, and cycloalkyl or aryl, such as benzoyl, trimethylphenyl, ethylphenyl. Cyclohexyl and cyclopentyl are preferred.

The concentration of the organic nitro compound in the reaction medium is preferably in the range from 1 to 15000 ppm, more preferably in the range from 5 to 500 ppm. The ratio of nitro compound to vanadium is preferably of the order of 1000:1, more preferably of the order of 100:1 and most preferably in the range from 10:1 to 1:1. The ratio of nitro compound to zirconium/hafnium is preferably of the order of 100 : 1, more preferably of the order of 25: 1 and most preferably in the range from 14 : 1 to 1 : 1.

The monomers are generally polymerized cationically at temperatures in the range from -120°C to +20°C, preferably in the range from -100°C to -20°C, and pressures in the range from 0.1 to 4 bar.

Inert solvents or diluents known to the person skilled in the art for butyl polymerization may be considered as the solvents or diluents (reaction medium). These comprise alkanes, chloroalkanes, cycloalkanes or aromatics, which are frequently also mono- or polysubstituted with halogens. Hexane/chloroalkane mixtures, methyl chloride, dichloromethane or the mixtures thereof may be mentioned in particular. Chloroalkanes are preferably used in the process according to the present invention.

Suitable vanadium compounds are known to the person skilled in the art from EP-A1-818 476 which is incorporated by reference herein. Vanadium chloride is preferably used. This may advantageously be used in the form of a solution in an anhydrous and oxygen-free alkane or chloroalkane or a mixture of the two with a vanadium concentration of below 10 wt.%. It may be advantageous to store (age) the V solution at room temperature or below for a few minutes up to 1000 hours before it is used. It may be advantageous to perform this aging with exposure to light.

Suitable zirconium halogenids and hafnium halogenids are disclosed in DE 100 42 118.0 which is incorporated by reference herein. Preferred are zirconium dichloride, zirconium trichloride, zirconium tetrachloride, zirconium oxidichloride, zirconium tetrafluoride, zirconium tetrabromide, and zirconium tetraiodide, hafnium dichloride, hafnium trichloride, hafnium oxidichloride, hafnium tetrafluoride, hafnium tetrabromide, hafnium tetraiodide, and hafnium tetrachloride. Less suitable are in general zirconium and/or hafnium halogenides with sterically demanding substituents, e.g. zirconocene dichloride or bis(methylcyclopentadienyle)zirconium dichchloride. Preferred is zirconium tetrachloride.

Zirconium halogenids and hafnium halogenids are advantageously used as a solution in a water- and oxygen free alkan or chloroalkan or a mixture thereof in presence of the organic nitro compounds in a zirconium/hafnium concentration below of 4 wt.%. It can be advantageous to store said solutions at room temperature or below for a period of several minutes up to 1000 hours (aging), before using them. It can be advantageous to store them under the influence of light.

Polymerization may be performed both continuously and discontinuously. In the case of continuous operation, the process is preferably performed with the following three feed streams:
I) solvent/diluent + isoolefin (preferably isobutene)
II) multiolefin (preferably diene, isoprene) (+ organic nitro compound in case of vanadium catalysis)
III) catalyst (+ organic nitro compound in case of zirconium/hafnium catalysis)

In the case of discontinuous operation, the process may, for example, be performed as follows:

The reactor, precooled to the reaction temperature, is charged with solvent or diluent, the monomers and, in case of vanadium catalysis, with the nitro compound. The initiator, in case of zirconium/hafnium catalysis together with the nitro compound, is then pumped in the form of a dilute solution in such a manner that the heat of polymerization may be dissipated without problem. The course of the reaction may be monitored by means of the evolution of heat.

All operations are performed under protective gas. Once polymerization is complete, the reaction is terminated with a phenolic antioxidant, such as, for example, 2,2'-methylenebis(4-methyl-6-tert.-butylphenol), dissolved in ethanol.

Using the process according to the present invention, it is possible to produce novel high molecular weight isoolefin copolymers having elevated double bond contents and simultaneously low gel contents. The double bond content is determined by proton resonance spectroscopy.

This process provides isoolefin copolymers with a comonomer content of greater than 2.5 mol%, a molecular weight M_{w} of greater than 240 kg/mol and a gel content of less than 1.2 wt.% which are useful in the preparation of the inventive compound.

In another aspect, these copolymers are the starting material for the halogenation process which yields the halogenated copolymers also useful for the preparation of the inventive compound. These halogenated compounds can be used together or without the non-halogenated copolymers described above.

Halogenated isoolefin rubber, especially butyl rubber, may be prepared using relatively facile ionic reactions by contacting the polymer, preferably dissolved in organic solvent, with a halogen source, e.g., molecular bromine or chlorine, and heating the mixture to a temperature ranging from about 20°C to 90°C for a period of time sufficient for the addition of free halogen in the reaction mixture onto the polymer backbone.

Another continuous method is the following: Cold butyl rubber slurry in chloroalkan (preferably methyl chloride) from the polymerization reactor in passed to an agitated solution in drum containing liquid hexane. Hot hexane vapors are introduced to flash overhead the alkyl chloride diluent and unreacted monomers. Dissolution of the fine slurry particles occurs rapidly. The resulting solution in stripped to remove traces of alkyl chloride and monomers, and brought to the desired concentration for halogenation by flash concentration. Hexane recovered from the Flash concentration step is condensed and returned to the solution drum. In the halogenation process butyl rubber in solution is contacted with chlorine or bromine in a series of high-intensity mixing stages. Hydrochloric or hydrobromic acid is generated during the halogenation step and must be neutralized. For a detailed description of the halogenation process see U.S. Patent Nos. 3,029,191 and 2,940,960, as well as U.S. Patent No. 3,099,644 which describes a continuous chlorination process, EP-A1-0 803 518 or EP-A1-0 709 401, all of which patents are incorporated herein by reference.

Another process suitable in this invention is disclosed in EP-A1-0 803 518 in which an improved process for the bromination of a C₄-C₆ isoolefin-C₄-C₆ conjugated diolefin polymer which comprises preparing a solution of said polymer in a solvent, adding to said solution bromine and reacting said bromine with said polymer at a temperature of from 10°C to 60°C and separating the brominated isoolefin-conjugated diolefin polymer, the amount of bromine being from 0.30 to 1.0 moles per mole of conjugated diolefin in said polymer, characterized in that said solvent comprises an inert halogen-containing hydrocarbon, said halogen-containing hydrocarbon comprising a C₂ to C₆ paraffinic hydrocarbon or a halogenated aromatic hydrocarbon and that the solvent further contains up to 20 volume per cent of water or up to 20 volume per cent of an aqueous solution of an oxidising agent that is soluble in water and suitable to oxidize the hydrogen bromide to bromine in the process substantially without oxidizing the polymeric chain is disclosed which is for U.S. patent practice also included by reference.

The skilled in the art will be aware of many more suitable halogenation processes but a further enumeration of suitable halogenation processes is not deemed helpful for further promoting the understanding of the present invention.

Preferably the bromine content is in the range of from 4 - 30 wt.%, even more preferably 6 - 17, particularly preferable 6-12.5 and the chlorine content is preferably in the range of from 2 - 15 wt.%, even more preferably 3-8, particularly preferable 3-6.

It is in the understanding of the skilled in the art that either bromine or chlorine or a mixture of both can be present.

The rubber composition for a tire tread of the present invention is obtained by blending said halogenated and/or non-halogenated a low-gel, high molecular weight isoolefin multiolefin copolymer with natural rubber and/or a diene synthetic rubber.

Preferred diene synthetic rubbers are disclosed in I. Franta, Elastomers and Rubber Compounding Materials, Elsevier, Amsterdam 1989 and comprise
- BR -: Polybutadiene
- ABR -: Butadiene/Acrylic acid-C₁-C₄-alkylester-Copolymers
- CR: Polychloroprene

- IR -: Polyisoprene
- SBR -: Styrol/Butadiene-Copolymerisates with Styrolcontents in the range of 1 to 60, preferably 20 to 50 wt.-%
- NBR -: Butadiene/Acrylonitrile-Copolmers with Acrylonitrilcontents of 5 to 60, preferably 10 to 40 wt.-%
- HNBR -: partially or totally hydrogenated NBR-rubber
- EPDM -: Ethylene/Propylene/Diene-Copolymerisates
- FKM: fluoropolymers or fluororubbers
and mixtures of the given polymers.

Among the diene synthetic rubbers, a high-cis BR is particularly preferable, and in the case of a combination of the natural rubber (NR) and the high-cis BR, a ratio of the natural rubber (NR) to the high-cis BR is 80/20 to 30/70, preferably 70/30 to 40/60. In addition, the amount of the combination of the natural rubber and the high- , cis BR is 70% by weight or more, preferably 80% by weight or more, more preferably 85% by weight or more.

Furthermore, the following rubbers are of particular interest for the manufacture of motor vehicle tyres with the aid of surface-modified fillers: natural rubber, emulsion SBRs and solution SBRs with a glass transition temperature above -50°C, which can optionally be modified with silyl ethers or other functional groups, such as those described e.g. in EP-A 447,066, polybutadiene rubber with a high 1,4-cis content (>90%), which is prepared with catalysts based on Ni, Co, Ti or Nd, and polybutadiene rubber with a vinyl content of 0 to 75%, as well as blends thereof.

Preferably the composition furthermore comprises in the range of 0.1 to 20 parts by weight of an organic fatty acid, preferably a unsaturated fatty acid having one, two or more carbon double bonds in the molecule which more preferably includes 10% by weight or more of a conjugated diene acid having at least one conjugated carbon-carbon double bond in its molecule.

Preferably those fatty acids have in the range of from 8- 22 carbon atoms, more preferably 12-18. Examples include stearic acid, palmic acid and oleic acid and their calcium-, magnesium-, potassium- and ammonium salts.

Preferably the composition furthermore comprises 5 to 500, more preferably 40 to 100 parts by weight per hundred parts by weight rubber (=phr) of an active or inactive filler.

The filler may be composed of
- highly disperse silicas, prepared e.g. by the precipitation of silicate solutions or the flame hydrolysis of silicon halides, with specific surface areas of 5 to 1000, preferably 20 to 400 m²/g (BET specific surface area), and with primary particle sizes of 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas of 20 to 400 m²/g and primary particle diameters of 10 to 400 nm;
- natural silicates, such as kaolin and other naturally occurring silica;
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide;
- carbon blacks; the carbon blacks to be used here are prepared by the lamp black, furnace black or gas black process and have BET specific surface areas of 20 to 200 m²/g, e.g. SAF, ISAF, HAF, SRF, FEF or GPF carbon blacks;
- rubber gels, especially those based on polybutadiene, butadiene/styrene copolymers, butadiene/acrylonitrile copolymers and polychloroprene;
or mixtures thereof.

Examples of preferred mineral fillers include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the butyl elastomer. For many purposes, the preferred mineral is silica, especially silica made by carbon dioxide precipitation of sodium silicate.

Dried amorphous silica particles suitable for use in accordance with the invention may have a mean agglomerate particle size between 1 and 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover has a BET surface area, measured in accordance with DIN (Deutsche Industrie Norm) 66131, of between 50 and 450 square meters per gram and a DBP absorption, as measured in accordance with DIN 53601, of between 150 and 400 grams per 100 grams of silica, and a drying loss, as measured according to DIN ISO 787/11, of from 0 to 10 percent by weight. Suitable silica fillers are available under the trademarks HiSil 210, HiSil 233 and HiSil 243 from PPG Industries Inc. Also suitable are Vulkasil S and Vulkasil N, from Bayer AG. Preferred are highly dispersible silicas as Ultrasil 7000 or Perkasil 1165 mp.

It might be advantageous to use a combination of carbon black and mineral filler in the inventive compound. In this combination the ratio of mineral fillers to carbon black is usually in the range of from 0.05 to 20, preferably 0.1 to 10.

For the rubber composition of the present invention it is usually advantageous to contain carbon black in an amount of 20 to 200 parts by weight, preferably 45 to 80 parts by weight, more preferably 48 to 70 parts by weight.

Further addition of silane compounds may be advantageous, especially in combination with highly active fillers. The silane compound may be a sulfur-containing silane compound. Suitable sulfur-containing silanes include those described in United States patent 4,704,414, in published European patent application 0,670,347 A1 and in published German patent application 4435311 A1. One suitable compound is a mixture of bis[3-(triethoxysilyl)propyl]-monosulfane, bis[3-(triethoxysilyl)-propyl] disulfane, bis[3-(triethoxysilyl)propyl]trisulfane and bis[3-(triethoxysilyl)-propyl]tetrasulfane and higher sulfane homologues available under the trademarks Si-69 (average sulfane 3.5), Silquest™ A-1589 (from CK Witco)or Si-75 (from Degussa) (average sulfane 2.0). Another example is bis[2-(triethoxysilyl)ethyl]-tetrasulfane, available under the trade-mark Silquest RC-2. Non-limiting illustrative examples of other sulfur-containing silanes include the following:
bis[3-(triethoxysilyl)propyl]disulfane,
bis[2-(trimethoxysilyl)ethyl]tetrasulfane,
bis[2-(triethoxysilyl)ethyl]trisulfane,
bis[3-(trimethoxysilyl)propyl]disulfane,
3-mercaptopropyltrimethoxysilane,
3-mercaptopropylmethyldiethoxysilane, and
3-mercaptoethylpropylethoxymethoxysilane.

Other preferred sulfur-containing silanes include those disclosed in published German patent application 44 35 311 A1, the disclosure of which is incorporated by reference.

The silane is usually applied in amounts in the range of from 2 to 6 phr.

The rubber blends according to the invention optionally contain crosslinking agents as well. Crosslinking agents which can be used are sulfur or peroxides, sulfur being particularly preferred. The sulphur curing can be effected in known manner. See, for instance, chapter 2, "The Compounding and Vulcanization of Rubber", of "Rubber Technology", 3^{rd} edition, published by Chapman & Hall, 1995.

The rubber composition according to the invention can contain further auxiliary products for rubbers, such as reaction accelerators, vulcanizing accelerators, vulcanizing acceleration auxiliaries, antioxidants, foaming agents, antiageing agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry.

The rubber aids are used in conventional amounts, which depend inter alia on the intended use. Conventional amounts are e.g. from 0.1 to 50 wt.%, based on rubber.

The rubber/rubbers, and optional one or more components selected from the group consisting of filler/fillers, one or more vulcanizing agents, silanes and further additives, are mixed together, suitably at an elevated temperature that may range from 30°C to 200°C. It is preferred that the temperature is greater than 60°C, and a temperature in the range 90 to 160°C is particularly preferred. Normally the mixing time does not exceed one hour and a time in the range from 2 to 30 minutes is usually adequate. The mixing is suitably carried out in an internal mixer such as a Banbury mixer, or a Haake or Brabender miniature internal mixer. A two roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder.

The vulcanization of the compounds is usually effected at temperatures in the range of 100 to 200°C, preferred 130 to 180°C (optionally under pressure in the range of 10 to 200 bar).

For compounding and vulcanization see also: Encyclopedia of Polymer Science and Engineering, Vol. 4, S. 66 et seq. (Compounding) and Vol. 17, S. 666 et seq. (Vulcanization).

The following examples are provided to illustrate the present invention:

### EXAMPLES

### Experimental details

Gel contents were determined in toluene after a dissolution time of 24 hours at 30°C with a sample concentration of 12.5 g/l. Insoluble fractions were separated by ultra-centrifugation (1 hour at 20000 revolutions per minute and 25°C).

The solution viscosity η of the soluble fractions was determined by Ubbelohde capillary viscosimetry in toluene at 30°C. **The molecular mass M**_{**v**} was calculated according to the following formula: In (Mᵥ) = 12,48 + 1,565 * in η.

GPC analysis was performed by a combination of four, 30 cm long columns from the company Polymer Laboratories (PL-Mixed A). The internal diameter of the columns was 0.75 cm). Injection volume was 100 µl. Elution with THF was performed at 0.8 ml/min. Detection was performed with a UV detector (260 nm) and a refractometer. Evaluation was performed using the Mark-Houwink relationship for polyisobutylene (dn/dc = 0.114; α = 0.6; K = 0.05).

Mooney-Viscosity was measured at 125°C with a total time of 8 minutes (ML 1+8 125°C).

The concentrations of the monomers in the polymer and the **"branching point"**^{**1**} were detected by NMR.
¹ J.L. White, T.D. Shaffer, C.J. Ruff, J.P. Cross: Macromolecules (1995) 28, 3290

**Isobutene** (Fa. Gerling+Holz, Deutschland, Qualität 2.8) was purified by purging through a column filled with sodium on aluminum oxide (Na-content 10 %).

**Isoprene** (Fa. Acros, 99%) was purified by purging through a column filled with dried aluminum oxide, and destilled under argon over calcium hydride. The water content was 25 ppm.

**Methyl chloride** (Fa. Linde, Qualität 2.8) was purified by purging through a column filled with active carbon black and another column with Sicapent.

**Methylene chloride** (Fa. Merck, Qualität: Zur Analyse ACS, ISO) was destilled under argon over phosphorous pentoxide.

**Hexane** was purified by destillation under argon over calcium hydride.

**Nitromethane** (Fa. Aldrich, 96 %) was stirred for 2 hours over phosphorous pentoxid, during this stirring argon was purged through the mixture. Then the nitromethane was destilled in vacuo (about 20 mbar).

**Vanadium tetrachloride** (Fa. Aldrich) was filtered through a glass filter under an argon atmosphere prior to use.

### Example 1

300 g (5.35 mole) of isobutene were initially introduced together with 700 g of methyl chloride and 27.4 g (0.4 mole) of isoprene at -90°C under an argon atmosphere and with exclusion of light. 0.61 g (9.99 mmole) of nitromethane was added to the monomer solution before the beginning of the reaction. A solution of vanadium tetrachloride in hexane (concentration: 0.62 g of vanadium tetrachloride in 25 ml of n-hexane) was slowly added dropwise (duration of feed approx. 15-20 minutes) to this mixture until the reaction started (detectable by an increase in the temperature of the reaction solution).

After a reaction time of approx. 10-15 minutes, the exothermic reaction was terminated by adding a precooled solution of 1 g of 2,2'-methylenebis(4-methyl-6-tert.-butylphenol) (Vulkanox BKF from Bayer AG, Leverkusen) in 250 ml of ethanol. Once the liquid had been decanted off, the precipitated polymer was washed with 2.5 l of ethanol, rolled out into a thin sheet and dried for one day under a vacuum at 50°C.

8.4 gr. of polymer were isolated. The copolymer had a intrinsic viscosity of 1.28 dl/g, a gel content of 0.8 wt.%, an isoprene content of 4.7 mole%, a Mₙ of 126 kg/mole, a M_{w} of 412.1 kg/mole, and a swelling index in toluene at 25°C of 59.8.

### Example 2

100 g of the polymer of example 1 are cut into pieces of 0.5 * 0.5 * 0.5 cm and were swollen in a 2-1 Glasflask in the dark for 12 hours at room temperature in 933 ml (615 g) of hexane (50 % n-Hexane, 50 % mixture of isomeres). Then the mixture was heated to 45°C and stirred for 3 hours in the dark.

To this mixture 20 ml of water were added. Under vigorous agitation at 45°C a solution of 17 g of bromine (0,106 mol) in 411 ml (271 g) of hexane was added in the dark. After 30 seconds the reaction was stopped by addition of 187,5 ml of aqueous 1 N NaOH. The mixture was stirred vigorously for 10 minutes. The yellow color of the mixture faded and turned into a milky white color.

After separation of the aqueous phase the mixture was washed 3 times with 75 ml of destilled water. The mixture was then poured into boiling water and the rubber coagulated. The coagulat was dried at 105°C on a rubber mill. As soon as the rubber got opaque 2 g of calcium stearat as stabilizer were added. (For analytical data see table 1). The nomenclature used in the microstuctural analysis is state of the art. However, it can also be found in CA-2,282,900 in Fig.3 and throughout the whole specification.

**Table 1**

| | |
|---|---|
| Yield | 98 % |
| Bromine content | 6,5 % |
| Mikro structure acc. to NMR (in mole%) | |
| 1,4 Isoprene | 0,11 |
| 1,2 Isoprene | 0,11 |
| Exomethylene | 2,32 |
| Products of rearrangements | 0,59 |
| Conjugated double bonds in Endo-structure | 0,16 |
| Double bonds in Endo-structure | 0,11 |
| **Total** | **3,40** |

### Example 3

110.15 g (1.96 mole) of isobutene were initially introduced together with 700 g of methyl chloride and 14.85 g (0.22 mole) of isoprene at -95°C under an argon atmosphere. A solution of 0.728 g (3.12 mmole) zirkonium tetrachloride and 2.495 g (40.87 mmole) of nitromethane in 25 ml of methylene chloride was slowly added dropwise within 30 minutes to this mixture.

After a reaction time of approx. 60 minutes, the exothermic reaction was terminated by adding a precooled solution of 1 g of Irganox 1010 (Ciba) in 250 ml of ethanol. Once the liquid had been decanted off, the precipitated polymer was washed with 2.5 l of acetone, rolled out into a thin sheet and dried for one day under a vacuum at 50°C.

47.3 g of polymer were isolated. The copolymer had a intrinsic viscosity of 1.418 dl/g, a gel content of 0.4 wt.%, an isoprene content of 5.7 mole%, a Mₙ of 818.7 kg/mole, a M_{w} of 2696 kg/mole, and a swelling index in toluene at 25°C of 88.2.

### Example 4

100 g of the polymer of example 3 are cut into pieces of 0.5 * 0.5 * 0.5 cm and were swollen in a 2-1 Glasflask in the dark for 12 hours at room temperature in 933 ml (615 g) of hexane (50 % n-Hexane, 50 % mixture of isomeres). Then the mixture was heated to 45°C and stirred for 3 hours in the dark.

To this mixture 20 ml of water were added. Under vigorous agitation at 45°C a solution of 17 g of bromine (0,106 mol) in 411 ml (271 g) of hexane was added in the dark. After 30 seconds the reaction was stopped by addition of 187,5 ml of aqueous 1 N NaOH. The mixture was stirred vigorously for 10 minutes. The yellow color of the mixture faded and turned into a milky white color.

After separation of the aqueous phase the mixture was washed 1 time with 500 ml of destilled water. The mixture was then poured into boiling water and the rubber coagulated. The coagulat was dried at 105°C on a rubber mill. As soon as the rubber got clear 2 g of calcium stearate as stabilizer were added. (For analytical data see table 1). The nomenclature used in the microstuctural analysis is state of the art. However, it can also be found in CA-2,282,900 in Fig.3 and throughout the whole specification.

**Table 2**

| | |
|---|---|
| Yield | 96 % |
| Bromine content | 6.9% |

### Example 5

Of the product of Example 1 & 2 a typical tire tread compound was prepared and vulcanized.

Krynol®1712 is an emulsion stryrene-butadiene-rubber with 23.5 mol% of polymerized styrene monomer, 37.5 wt.% highly aromatic mineral oil, Krynol®1721 is an emulsion stryrene-butadiene-rubber with 40 mol% of polymerized styrene monomer, 37.5 wt.% highly aromatic mineral oil. Both are available from Bayer AG, D. BUNA® CB 24 is a Nd-high-cis butadiene rubber available from Bayer AG, D.

As comparative example a comparable compound was prepared of POLYSAR Bromobutyl ® 2030 available from Bayer Inc., Canada. The components are given in parts by weight.

Vulkacit® CZ is a sulfenamid accelerator available from Bayer AG, D.
Vulkacit® Merkapto is a mercapto accelerator available from Bayer AG, D.

Vulkanox® HS and Vulkanox 4020 are anti-aging agents available from Bayer AG, D.

Rhenopal® is available from Rhein Chemie Rheinau GmbH, D.

| Example | 5a | 5b | 5c | 5d | 5e |
|---|---|---|---|---|---|
| Compounds Brabender mixed at 150°C, curatives were added on the mill at 50°C. | | | | | |
| Krynol® 1712 | 103 | | 82,5 | 82,5 | 82,5 |
| Krynol® 1721 | | 103 | | | |
| Example 1 | | | | | 15 |
| Example 2 | | | | 15 | |
| Bromobutyl® 2030 | | | 15 | | |
| BUNA® CB 24 | 25 | 25 | 25 | 25 | 25 |
| N - 234 Carbon Black | 75 | 75 | 75 | 75 | 75 |
| Rhenopal® 450 | 12 | 12 | 17,5 | 17,5 | 17,5 |
| ZnO RS | 4 | 4 | 4 | 4 | 4 |
| Stearic Acid | 2 | 2 | 2 | 2 | 2 |
| Vulkanox® HS | 1,5 | 1,5 | 1,5 | 1,5 | 1,5 |
| Vulkanox® 4020 | 1 | 1 | 1 | 1 | 1 |
| Antilux 654 | 1 | 1 | 1 | 1 | 1 |
| Sulphur | 1,5 | 1,5 | 1,5 | 1,5 | 1,5 |
| Vulkacit® CZ | 1,2 | 1,2 | 1,2 | 1,2 | 1,2 |
| Vulkacit® Merkapto | | | | | 0,5 |

### POLYMER PROPERTIES

| **UNCURED PROPERTIES** | 5a | 5b | 5c | 5d | 5e |
|---|---|---|---|---|---|
| Mooney ML 1+4 @ 100°C DIN 53 523 | 61,7 | 57,7 | 63,1 | 66 | 51,3 |
| MR 30 | 13,4 | 12,5 | 15,2 | 15,3 | 13,6 |

| **CURED PROPERTIES** | 5a | 5b | 5c | 5d | 5e |
|---|---|---|---|---|---|
| on Monsanto Rheometer MDR 2000 @ 165°C | | | | | |
| MIN DIN 53529 | 2,5 | 2,4 | 2,7 | 2,8 | 2,3 |
| Ts1 DIN 53529 | 2,4 | 2,6 | 2,5 | 1,7 | 1,6 |
| T50 DIN 53529 | 4,7 | 4,8 | 4,8 | 4,3 | 2,6 |
| T90 DIN 53529 | 8,4 | 8,5 | 8,9 | 9,3 | 4,9 |
| MH DIN 53529 | 14,7 | 13,9 | 14,1 | 15,3 | 13,9 |
| | | | | | |

| Cured Propreties in a hot mould 20 mins at 165°C | | | | | |
|---|---|---|---|---|---|
| Tensile Properties - stab DIN 53504 | | | | | |
| Tensile strength - MPa | 23,14 | 21,74 | 19,38 | 19,64 | 19,94 |
| Elongation at break % | 667 | 643 | 625 | 554 | 631 |
| 25% Modulus - MPa | 0,78 | 0,84 | 0,82 | 0,89 | 0,72 |
| 50% Modulus - MPa | 1,05 | 1,13 | 1,11 | 1,27 | 1 |
| 100% Modulus - MPa | 1,5 | 1,59 | 1,64 | 2,02 | 1,5 |
| 150% Modulus - MPa | 2,16 | 2,28 | 2,4 | 3,02 | 2,24 |
| 200% Modulus - MPa | 3,23 | 3,45 | 3,6 | 4,56 | 3,4 |
| 300% Modulus - MPa | 6,73 | 6,94 | 6,93 | 8,75 | 6,82 |
| Hardness at 23°C | 60 | 61 | 60 | 63 | 59 |
| | | | | | |
| Abrasion DIN 53516 | 60 | 86 | 86 | 92 | 77 |
| | | | | | |
| Roelig at 0°C DIN 53513 | 0,37 | 0,461 | 0,405 | 0,374 | 0,422 |
| Roelig at 60°C DIN 53513 | 0,235 | 0,259 | 0,241 | 0,221 | 0,233 |

Example 5a is a standard tread compound used in replacement tires. Example 5b has a higher styrene content (40% in place of 23,5%) which gives a higher wet grip (tan delta by Roelig at O°C) but worse abrasion resistance (DIN Abrasion loss in cumm) and rolling resistance (tan delta at 60°C).

It can be seen that the addition of standard Bromobutyl 2030 at 15 phr (Example 5c) gives some increase in wet grip but a loss in abrasion resistance and rolling resistance.

Example 5d also shows the higher grip but also improved rolling resistance while the wear is worse.

Example 5e with a high unsaturated butyl shows also good wet grip and rolling resistance and only a small increase in abrasion loss.

## Claims

1. Rubber composition for a tire tread, **characterized in that** said rubber composition comprises a low-gel, high molecular weight isoolefin multiolefin copolymer with a multiolefin content of greater than 2.5 mol%, a molecular weight M_{w} of greater than 240 kg/mol and a gel content of less than 1.2 wt.% or a halogenated, low-gel, high molecular weight isoolefin multiolefin copolymer with a multiolefin content of greater than 2.5 mol%, a molecular weight M_{w} of greater than 240 kg/mol and a gel content of less than 1.2 wt.% or a mixture of said non-halogenated and halogenated isoolefin copolymer.

2. Rubber composition according to claim 1, **characterized in that** said rubber composition comprises a low-gel, high molecular weight butyl rubber or a halogenated low-gel, high molecular weight butyl rubber or a mixture of said non-halogenated and halogenated butyl rubber.

3. Rubber composition according to claim 1 or 2, **characterized in that** said rubber composition comprises a low-gel, high molecular weight isoolefin multiolefin copolymer synthesized from isobutene, isoprene and optionally further monomers or a halogenated low-gel, high molecular weight isoolefin multiolefin copolymer synthesized from isobutene, isoprene and optionally further monomers or a mixture of said non-halogenated and halogenated isoolefin multiolefin copolymer.

4. Rubber composition according to any of claims 1 to 3, **characterized in that** said rubber composition comprises furthermore a rubber selected from the group consisting of natural rubber, BR, ABR, CR. IR, SBR, NBR, HNBR, EPDM, FKM and mixtures thereof.

5. Rubber composition according to any of claims 1 to 4, **characterized in that** said rubber composition comprises furthermore a filler selected from the group consisting of carbon black, mineral filler and mixtures thereof.

6. Rubber composition according to any of claims 1 to 5, **characterized in that** said rubber composition comprises furthermore a silane compound and/or a vulcanizing agent.

7. Process for the preparation of the rubber compound according to any of claims 1 to 6, **characterized in that** a low-gel, high molecular weight isoolefin multiolefin copolymer with a multiolefin content of greater than 2.5 mol%, a molecular weight M_{w} of greater than 240 kg/mol and a gel content of less than 1.2 wt.% or a halogenated, low-gel, high molecular weight isoolefin multiolefin copolymer with a multiolefin content of greater than 2.5 mol%, a molecular weight M_{w} of greater than 240 kg/mol and a gel content of less than 1.2 wt.% or a mixture of both is mixed with one or more compounds selected from the group consisting of rubber, filler, vulcanizing agent, silane compound, additives.

8. Process according to claim 7, **characterized in that** said low-gel, high molecular weight isoolefin multiolefin copolymer and/or said halogenated low-gel, high molecular weight isoolefin multiolefin copolymer are produced in a process comprising the following steps:
a) polymerizing at least one isoolefin, at least one multiolefin, and optionally further monomers in presence of a catalyst and a organic nitro compound and optionally
b) contacting the resulting copolymer under halogenation conditions with at least one halogenating agent.

9. A process according to Claim 8, wherein said organic nitro compound is of the general formula (I)
R-NO₂ (I)
wherein R represents H, C₁-C₁₈ alkyl, C₃-C₁₈ cycloalkyl or C₆-C₂₄ cycloaryl.

10. A process according to Claim 8 or 9, wherein the concentration of said organic nitro compound in the reaction medium is in the range from 1 to 1000 ppm.

11. A process according to any of the claims 8-10, wherein said a catalyst/initiator is selected from the group consisting of vanadium compounds, zirconium halogenids, hafnium halogenides, mixtures of two or three thereof, and mixtures of one, two or three thereof with AlCl₃ and from AlCl₃ deriveable catalyst systems, diethylaluminum chloride, ethylaluminum chloride, titanium tetrachloride, stannous tetrachloride, boron trifluoride, boron trichloride, or methylalumoxane.

12. A tire tread comprising rubber compound according to any of claims 1 to 6.
